# FASCICULE DE BREVET EUROPEEN

(11) **EP 3 317 756 B1**
(45) Date de publication et mention de la délivrance du brevet: **16.09.2020**
(21) Numéro de dépôt: 16739046.7
(22) Date de dépôt: 30.06.2016
(51) Int. Cl.: G06F 3/0488, G06F 3/0484, H04N 5/44, H04N 21/422, G06F 3/041, G08C 17/02, G08C 23/04

(54) **PROCEDE ET DISPOSITIF DE COMMANDE D'UNE CONSIGNE DE NIVEAU D'UN EQUIPEMENT DISTANT PAR UN DISPOSITIF TACTILE PORTATIF**
VERFAHREN UND VORRICHTUNG ZUR STEUERUNG EINER PEGELEINSTELLUNG EINES ENTFERNTEN GERÄTS UNTER VERWENDUNG EINER TRAGBAREN BERÜHRUNGSEMPFINDLICHEN VORRICHTUNG
METHOD AND DEVICE FOR CONTROLLING A LEVEL SETTING OF A REMOTE APPLIANCE USING A PORTABLE TOUCH-SENSITIVE DEVICE

(30) Priorité: 30.06.2015 FR 1556183
(43) Date de publication de la demande: 09.05.2018
(73) Titulaire: Softathome, 92700 Colombes (FR)
(72) Inventeur: SOUHAMI, David, 94160 Saint Mande (FR); MAKOWSKI, Wojciech, 78100 Saint Germain en Laye (FR)
(74) Mandataire: IPAZ
(86) Numéro de dépôt international: PCT/EP2016/065331
(87) Numéro de publication internationale: WO 2017/001573

(56) Documents cités:
- EP-A1- 2 677 741
- US-A- 5 903 229
- US-A1- 2010 156 806
- US-A1- 2012 146 927

## Description

### Introduction

L'invention se rapporte à un procédé de commande d'une consigne de niveau d'un équipement distant par un dispositif tactile portatif. L'invention se rapporte également à un dispositif mettant en œuvre ce procédé et à un produit programme d'ordinateur comprenant des instructions pour réaliser les étapes du procédé.

### Art antérieur

On connaît un procédé de commande d'une consigne de niveau sonore d'un équipement par un dispositif tactile portatif. Une barre de volume est classiquement représentée sur un écran tactile avec une barre de défilement et un curseur déplaçable.

Pour contrôler la consigne de niveau sonore de l'équipement distant, il est nécessaire de regarder l'écran tactile pour identifier l'emplacement de la barre de défilement ainsi que la position courante du curseur afin de pouvoir déplacer le curseur dans le but d'augmenter et/ou réduire l'intensité du son.

Un inconvénient d'un tel procédé est de devoir regarder l'écran tactile pour commander la consigne de niveau de l'équipement distant.

Le document US2010/0156806 A1 décrit un dispositif comprenant un écran tactile, une mémoire pour stocker un groupe d'instructions et un processeur. Le processeur peut exécuter les instructions dans la mémoire pour détecter qu'un mouvement circulaire est effectué sur ou près d'une surface de l'écran tactile, détecter un emplacement sur l'écran tactile sur lequel le mouvement circulaire est effectué, et effectuer un zoom. ou dézoomer sur un élément. Il est prévu des entrées et sorties sonores et un vibreur.

Le document US5903229 A décrit un procédé permettant à un utilisateur de commander une consigne de niveau en détectant des gestes circulaires. Il décrit un dispositif à connecter par exemple à un ordinateur et comprenant : un dispositif de pointage pour recevoir des données de coordonnées sur une surface de panneau; et un détecteur de direction de rotation pour déterminer une direction de rotation d'une entrée de l'utilisateur sur la surface du panneau, dans le sens des aiguilles d'une montre ou dans le sens contraire des aiguilles d'une montre sur la base des données de coordonnées reçues par le dispositif de pointage. Un haut-parleur ou un buzzer peut être utilisé pour émettre un son.

Le document US2012146927 A1 décrit un procédé de détection de gestes circulaires sur un pavé tactile. Le procédé est basé sur la division virtuelle du pavé tactile en au moins trois quadrants autour d'un point fixe au centre du pavé tactile. L'enregistrement dans le temps des codes correspondant aux quadrants touchés permet de déterminer si un geste circulaire est effectué, et dans quel sens, horaire ou antihoraire.

Le document EP2677741 est un exemple de document divulguant en combinaison l'ensemble des caractéristiques du début de la revendication 1, à savoir un "Procédé de commande d'une consigne de niveau d'un équipement distant par un dispositif portatif comprenant une surface tactile".

Un but de la présente invention est de proposer un procédé et un dispositif tactile pour commander une consigne de niveau d'un équipement distant par le dispositif tactile portatif de manière à pallier tout ou partie des inconvénients de l'état de la technique.

### Exposé de l'invention

On atteint au moins un but de l'invention avec, selon un premier aspect de l'invention, un procédé de commande d'une consigne de niveau selon la revendication 1.

Dans un mode de réalisation, la surface tactile est réalisée par un écran tactile. La surface tactile peut être constituée par tout ou partie de l'écran tactile.

Avantageusement, le dispositif portatif peut intégrer l'unité sonore et/ou l'unité vibratoire.

De préférence, le dispositif portatif intègre des moyens d'émissions pour émettre la consigne à destination de l'équipement distant. Ces moyens sont typiquement réalisés par un émetteur sans-fils, mettant en œuvre des protocoles tels que BLE (Bluetooth Low Energy) ou Wifi.

Avantageusement, la détection d'un geste global correspondant à un déplacement du doigt sur un arc orienté de la surface tactile depuis une première zone vers une seconde zone génère une même consigne pour chaque sens de déplacement détecté dans la première et la seconde zone.

De manière plus avantageuse, la détection d'un geste global correspondant à un déplacement d'un doigt sur une boucle orientée de la surface tactile entourant l'intersection des diagonales depuis une première zone génère une même consigne pour chaque sens de déplacement détecté sur chacune des zones. On réalise ainsi une molette virtuelle commandée par un déplacement sensiblement circulaire du doigt dans un sens de rotation ou dans l'autre.

De manière encore plus avantageuse, la détection d'un geste global correspondant à un déplacement d'un doigt depuis une première zone sur une pluralité de boucles orientées de la surface tactile entourant chacune l'intersection des diagonales génère une même consigne pour chaque sens de déplacement détecté sur chacune des zones.

Dans un mode de réalisation, la détection d'un geste global correspondant à un déplacement d'un doigt sur une boucle orientée de la surface tactile entourant l'intersection des diagonales depuis une première zone selon le sens de rotation horaire génère une même consigne d'augmentation du niveau de l'équipement pour chaque sens de déplacement détecté sur chacune des zones. Alternativement, la détection d'un geste global correspondant à un déplacement d'un doigt sur une boucle orientée de la surface tactile entourant l'intersection des diagonales depuis une première zone selon le sens de rotation horaire génère une même consigne de diminution du niveau de l'équipement pour chaque sens de déplacement détecté sur chacune des zones.

Dans un mode de réalisation, la détection d'un geste global correspondant à un déplacement d'un doigt sur une boucle orientée de la surface tactile entourant l'intersection des diagonales depuis une première zone selon le sens de rotation trigonométrique génère une même consigne de diminution du niveau de l'équipement pour chaque sens de déplacement détecté sur chacune des zones. Alternativement, la détection d'un geste global correspondant à un déplacement d'un doigt sur une boucle orientée de la surface tactile entourant l'intersection des diagonales depuis une première zone selon le sens de rotation trigonométrique génère une même consigne d'augmentation du niveau de l'équipement pour chaque sens de déplacement détecté sur chacune des zones.

Le son joué par l'unité sonore et/ou la vibration générée par l'unité vibratoire constituent des retours sonores et/ou vibratoires pour l'utilisateur. Ces retours ont pour avantage de confirmer à l'utilisateur l'ordre qu'il a souhaité émettre. Ils ont également pour avantage de permettre d'affiner la perception du contact physique d'un bouton.

Selon le type de surface tactile, le doigt de l'utilisateur peut être remplacé par un outil, par exemple un stylet.

Le niveau de l'équipement distant peut être un volume sonore. Ce peut aussi être la fréquence d'une radio, la luminosité d'une lampe ou une consigne de température d'un équipement tel qu'un radiateur ou un climatiseur.

Le niveau de l'équipement distant peut encore être le numéro de chaine d'une station de télévision, le numéro d'un morceau de musique, un élément d'un menu d'interface graphique ou un objet sélectionnable parmi une liste d'objets.

L'étape de jouer un son par l'unité sonore peut comprendre une étape de faire varier l'intensité et/ou la fréquence du son joué par l'unité sonore en fonction du sens de déplacement détecté. L'intensité et/ou la fréquence du son joué peuvent augmenter lorsque la consigne de niveau détectée par le dispositif portatif est une augmentation du niveau. L'intensité et/ou la fréquence du son joué peuvent diminuer lorsque la consigne de niveau détectée par le dispositif portatif est une augmentation du niveau.

De préférence, le dispositif portatif intègre des moyens pour faire varier l'intensité et/ou la fréquence sonore tels qu'un contrôleur de son.

Alternativement, ou en combinaison avec ce qui précède, l'étape de générer une vibration par l'unité vibratoire peut comprendre une étape de faire varier l'intensité et/ou la fréquence de la vibration générée par l'unité vibratoire en fonction du sens de déplacement détecté. L'intensité et/ou la fréquence de la vibration générée peuvent augmenter lorsque la consigne de niveau détectée par le dispositif portatif est une augmentation du niveau. L'intensité et/ou la fréquence de la vibration générée peuvent diminuer lorsque la consigne de niveau détectée par le dispositif portatif est une augmentation du niveau.

De préférence, le dispositif portatif intègre des moyens pour faire varier l'intensité et/ou la fréquence de vibration tels qu'un contrôleur de vibration.

L'étape de jouer un son par l'unité sonore peut comprendre une étape de faire varier l'intensité et/ou la fréquence du son joué par l'unité sonore en fonction d'une consigne de niveau de l'équipement distant par rapport à des consignes basses et hautes de l'équipement distant.

Alternativement, ou en combinaison avec ce qui précède, l'étape de générer une vibration par l'unité vibratoire peut comprendre une étape de faire varier l'intensité et/ou la fréquence de la vibration générée par l'unité vibratoire en fonction d'une consigne de niveau de l'équipement distant par rapport à des consignes basses et hautes de l'équipement distant.

Le procédé selon l'invention peut comprendre une réception de la consigne de niveau de l'équipement distant par des moyens de réception sans-fils.

Le dispositif portatif peut intégrer des moyens de réception pour recevoir la consigne de niveau de l'équipement distant. Ces moyens sont typiquement un récepteur sans-fils, mettant en œuvre des protocoles tels que BLE ou Wifi. Ces moyens de réception peuvent être intégrés avec les moyens d'émissions dans une unité de transmission intégrée au dispositif portatif.

Selon un autre mode de réalisation, le procédé peut comprendre une mémorisation de la consigne de niveau de l'équipement distant.

Le dispositif portatif peut comprendre une mémoire enregistrant la consigne de niveau de l'équipement distant. La consigne de niveau peut être déterminée à partir d'un historique d'émissions de consignes d'augmentation ou de diminution à destination de l'équipement distant.

L'intensité et/ou la fréquence du son joué et/ou de la vibration générée peuvent varier entre une intensité et/ou fréquence basse prédéterminée lorsque la consigne de niveau de l'équipement distant est la plus basse et une intensité et/ou fréquence haute prédéterminée lorsque la consigne de niveau de l'équipement distant est la plus haute.

La variation de l'intensité et/ou de la fréquence du son joué par l'unité sonore et/ou de la vibration générée en fonction de la consigne de niveau de l'équipement distant permettent à l'utilisateur de connaître la consigne de niveau de l'équipement distant sans en connaître la valeur. L'utilisateur peut ainsi déterminer qu'un climatiseur a reçu pour consigne de température la plus basse possible, sans avoir à connaître cette température ni encore la ressentir.

La consigne la plus basse et la plus haute de niveau de l'équipement distant peuvent être connues du dispositif portatif par une réception d'un message en provenance de l'appareil distant comportant les consignes les plus basses et les plus hautes.

La consigne la plus basse et la plus haute de niveau de l'équipement distant peut alternativement, ou en combinaison avec ce qui précède, être connues du dispositif portatif par une mémorisation des consignes les plus basses et les plus hautes de l'équipement distant.

La condition vérifiée par le procédé selon l'invention peut être une détection (P0) d'un geste global suivie d'une comparaison (C).

De préférence, la détection d'un geste global met en œuvre une comparaison du geste global détecté à une liste prédéterminée de geste interdisant la poursuite du procédé. Ainsi, un geste particulier peut correspondre à une action particulière, telle que la commande d'une consigne de niveau minimale.

Alternativement, la condition vérifiée par le procédé selon l'invention peut être prévue pour toujours être vraie. Dans ce cas, les étapes de filtrer, de détecter, de jouer et d'émettre sont toujours réalisées.

Selon un deuxième aspect de l'invention, il est proposé un dispositif portatif de commande d'une consigne de niveau, tel qu'un niveau sonore, d'un équipement distant, le dispositif comportant :
- une surface tactile de conformation sensiblement rectangulaire ;
- une unité de traitement ;
- une unité sonore et/ou une unité vibratoire ;
- une unité d'émission de commande à destination de l'équipement distant.

L'unité de traitement du dispositif selon le deuxième aspect de l'invention est configurée et/ou programmée pour mettre en œuvre les étapes du procédé selon le premier aspect de l'invention ou l'un de ses perfectionnements.

Selon un troisième aspect de l'invention, il est proposé un produit programme d'ordinateur comprenant des instructions pour réaliser les étapes du procédé de commande d'une consigne de niveau d'un équipement distant par un dispositif portatif selon le premier aspect, ou l'un de ses perfectionnements, lorsqu'il est exécuté par un appareil informatique.

Selon un quatrième aspect de l'invention, il est proposé un système comprenant un équipement distant et un dispositif portatif de commande d'une consigne de l'équipement distant selon le deuxième aspect de l'invention.

### Description des figures

D'autres particularités et avantages de l'invention apparaîtront à la lecture de la description détaillée de mises en œuvre et de modes de réalisation nullement limitatifs, au regard de figures annexées sur lesquelles :
- la FIGURE 1 est une vue schématique d'un système selon un premier mode de réalisation de l'invention ;
- la FIGURE 2 est une vue schématique d'un système selon un deuxième mode de réalisation de l'invention ;
- la FIGURE 3 est une vue schématique d'une surface tactile d'un dispositif portatif de commande selon un mode de réalisation de l'invention ;
- la FIGURE 4 est un ordinogramme d'un procédé selon un premier mode de réalisation de l'invention.

### Description de l'invention

Ces modes de réalisation n'étant nullement limitatifs, on pourra notamment réaliser des variantes de l'invention ne comprenant qu'une sélection de caractéristiques décrites par la suite, telles que décrites ou généralisées, isolées des autres caractéristiques décrites, si cette sélection de caractéristiques est suffisante pour conférer un avantage technique ou pour différencier l'invention par rapport à l'état de la technique.

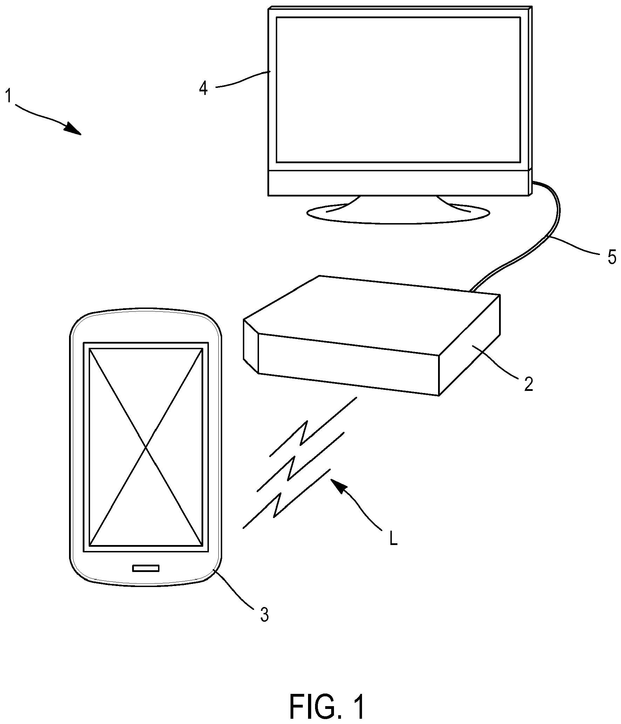

La FIGURE 1 illustre un système 1 selon un premier mode de réalisation de l'invention. Le système 1 comprend :
- un équipement distant 2, ici un boîtier décodeur ou « set top box » en anglais ;
- un dispositif portatif de commande 3, ici un « smartphone » ;
- une télévision 4.

Le boîtier décodeur 2 génère des signaux comprenant des informations d'affichage et une consigne de niveau sonore à destination de la télévision 4.

Usuellement les signaux générés sont transportés entre le boîtier décodeur 2 et la télévision 4 par un câble HDMI 5.

Dans l'exemple représenté, le boîtier décodeur 2 comprend en outre un transmetteur de signaux BLE (non représenté). Le smartphone 3 comprend également un transmetteur de signaux BLE et peut ainsi être en communication selon une liaison sans-fils L avec le boîtier décodeur 2.

Dans l'exemple représenté, la boîtier décodeur 2 est configuré pour recevoir une consigne de niveau émise par le smartphone 3 et transmettre cette consigne de niveau à la télévision 4.

A cet effet, une application spécifique est exécutée par le smartphone 3 qui est décrite plus précisément en référence à un second mode de réalisation d'un système selon l'invention.

L'application met en œuvre un procédé de commande d'une consigne de niveau de la set top box 2, telle que le volume sonore, par le smartphone 3 dont la surface tactile est virtuellement segmentée en zones. Le procédé met en œuvre un filtre de déplacements sur le smartphone 3 afin de les projeter selon une direction principale de la zone. Une détection du sens de déplacement sur cette projection est réalisée ainsi qu'un retour informatif sonore ou vibratoire en fonction du sens de déplacement détecté. Le procédé comprend en outre une émission d'une consigne d'augmentation ou de diminution du niveau sonore de la set top box 2 selon le sens du déplacement détecté.

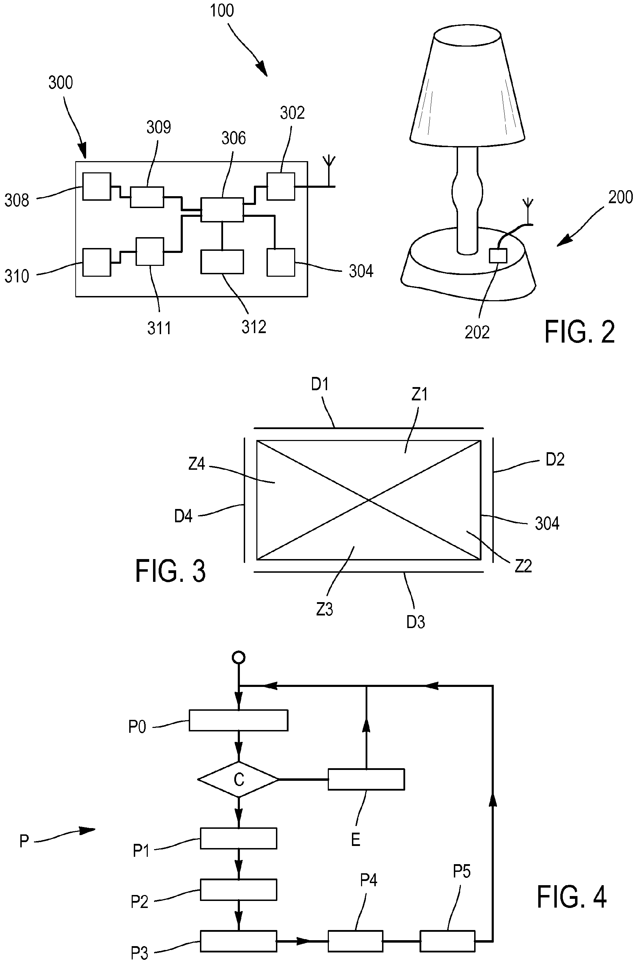

La FIGURE 2 illustre un système 100 selon un second mode de réalisation de l'invention. Le système 100 comprend un équipement distant 200 ainsi qu'un dispositif portatif de commande 300 d'une consigne de niveau de l'équipement distant 200 selon l'invention.

Dans l'exemple ici illustré par la FIGURE 2, l'équipement 200 est une lampe comprenant une ampoule dont il est possible de faire varier l'intensité d'éclairage. Dans l'exemple représenté, le niveau de l'équipement distant 200 est ainsi l'intensité d'éclairage et peut être commandé au moyen d'une consigne émise par l'équipement distant 200.

A cet effet, l'équipement 200 est équipé d'un récepteur et émetteur sans-fils 202 mettant en œuvre un protocole sans-fils BLE configuré pour recevoir une consigne de niveau et transmettre cette consigne de niveau à un contrôleur (non représenté) de l'intensité d'éclairage de l'équipement distant 200.

La consigne de niveau est une consigne d'augmentation ou de diminution du niveau. Elle est émise à destination de l'équipement distant 200 par un récepteur et émetteur 302 sans-fils mettant en œuvre le protocole sans-fils BLE. Les moyens d'émission 302 sont intégrés au dispositif portatif 300.

Le dispositif portatif 300 comprend en outre une surface tactile 304 de conformation sensiblement rectangulaire, une unité de traitement 306 réalisée par un microprocesseur, une unité sonore 308 sous forme de haut-parleur et une unité vibratoire 310 sous forme de vibreur, une unité de stockage 312 sous forme de mémoire flash.

L'unité de traitement 306 est programmée pour mettre en œuvre les étapes d'un procédé de commande P d'une consigne de niveau de l'équipement distant 200 par le dispositif portatif 300.

La FIGURE 4 décrit le procédé de commande P selon un mode de réalisation.

Le procédé de commande P comprend une détection P0 d'un geste global.

La détection d'un geste global met en œuvre une comparaison C du geste global détecté à une liste prédéterminée de geste interdisant la poursuite du procédé P. La liste prédéterminée de geste comprend la détection de deux gestes chacun défini par un trait suivant l'une ou l'autre des diagonales de la surface tactile 304. Lorsque l'un de ces deux gestes est détecté lors de l'étape P0, l'étape de comparaison C conduit à un envoi E de la commande d'une consigne de niveau minimale à la lampe distante 200 et le procédé P reboucle sur l'étape P0.

Si la détection P0 du geste global suivie de la comparaison C l'autorise, le procédé comprend en outre les étapes suivantes :
- une segmentation virtuelle P1 de la surface tactile 304 en quatre zones Z1, Z2, Z3 et Z4 illustrées sur la FIGURE 3 et déterminées par les diagonales du rectangle de la surface tactile 304,
- pour chacune des zones Z1, Z2, Z3 et Z4,
   ∘ une étape P2 de filtrer des déplacements d'un doigt de l'utilisateur sur la zone pour identifier uniquement les déplacements du doigt selon une direction respective D1, D2, D3, D4 parallèle au côté du rectangle associé à la zone,
   ∘ une étape P3 de détecter un sens de déplacement du doigt par rapport à la direction,
   ∘ une étape P4 de jouer un son par l'unité sonore 308 et générer une vibration par l'unité vibratoire 310 en fonction du sens de déplacement détecté,
   ∘ une étape P5 d'émettre les moyens d'émission 302 une consigne d'augmentation ou de diminution du niveau de l'équipement distant 200 selon le sens du déplacement détecté.

L'étape P4 met en œuvre l'unité de traitement 306 qui génère des ordres respectifs à destination d'un contrôleur de son 309 adapté à commander l'unité sonore 308 et d'un contrôleur de vibration 311 adapté à commander l'unité vibratoire 310.

La détection P0 d'un geste global correspondant à un déplacement d'un doigt sur une boucle orientée de la surface tactile 304 entourant l'intersection des diagonales depuis une première zone génère une même consigne pour chaque sens de déplacement détecté sur chacune des zones.

On réalise ainsi une molette virtuelle commandée par un déplacement sensiblement circulaire du doigt dans un sens de rotation ou dans l'autre.

La détection d'un tel geste selon le sens de rotation horaire génère une même consigne d'augmentation du niveau de l'équipement pour chaque sens de déplacement détecté sur chacune des zones.

La détection d'un tel geste selon le sens de rotation trigonométrique génère une même consigne de diminution du niveau de l'équipement pour chaque sens de déplacement détecté sur chacune des zones.

L'étape P4 comprend :
- une étape de faire varier l'intensité et la fréquence du son joué par l'unité sonore en fonction d'une consigne de niveau de l'équipement distant par rapport à des consignes basses et hautes de l'équipement distant, et
- une étape de faire varier l'intensité et la fréquence de la vibration générée par l'unité vibratoire en fonction d'une consigne de niveau de l'équipement distant par rapport à des consignes basses et hautes de l'équipement distant.

Les consignes extrêmes de niveau de l'équipement distant, dans l'exemple illustré la luminosité la plus basse et la plus haute de l'équipement distant, sont enregistrées dans l'unité de stockage 312.

Selon le mode de réalisation illustré, ces consignes extrêmes sont connues de l'unité de traitement 306 au moyen d'une réception par le récepteur 302 d'un message émis par l'émetteur 202 de l'équipement distant 200 comprenant les consignes extrêmes.

La consigne de niveau de l'équipement distant 200 est déterminée par l'unité de traitement 306 à partir d'un historique d'émissions de consignes d'augmentation ou de diminution enregistré dans l'unité de stockage 312. Une liste de consignes d'augmentation ou de diminution permet de déterminer la consigne de niveau courante de l'équipement distant.

La connaissance de la consigne courante de niveau de l'équipement distant et des consignes extrêmes de l'équipement distant par l'unité de traitement 306 permet de faire jouer un son par l'unité sonore 308 et de générer une vibration par l'unité vibratoire 310 qui révèle à l'utilisateur la consigne courante de niveau de l'équipement distant, sans qu'il ait besoin de la vérifier en regardant l'équipement distant 202 ou le dispositif de commande 302.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

On peut par exemple avantageusement implémenter un produit programme d'ordinateur comprenant des instructions pour réaliser les étapes du procédé de commande d'une consigne de niveau d'un équipement distant par un dispositif portatif selon l'invention sous forme d'une application destinée à un smartphone ou tablette dont l'écran tactile est la surface tactile utilisée par le procédé de commande.

### Nomenclature

- 1: système
- 2: set top box
- 3: smartphone
- 4: télévision
- 5: câble HDMI
- 100: système
- 200: équipement distant
- 202: récepteur/émetteur sans-fils
- 300: dispositif de commande
- 302: récepteur/émetteur sans-fils
- 304: surface tactile
- D1, D2, D3, D4: directions de la surface tactile
- Z1, Z2, Z3, Z4: zones de la surface tactile
- 306: unité de traitement
- 308: unité sonore
- 309: contrôleur de son
- 310: unité vibratoire
- 311: contrôleur de vibration
- 312: unité de stockage
- P: procédé de commande
- P0: détection d'un geste global
- C: comparaison
- E: envoi de commande
- P1: segmentation virtuelle
- P2: filtre des déplacements
- P3: détection d'un sens de déplacement
- P4: jouer un son et générer une vibration
- P5: émettre une consigne d'augmentation ou de diminution

## Revendications

1. Procédé de commande (P) d'une consigne de niveau d'un équipement distant (200) par un dispositif portatif (300) comprenant une surface tactile (304), ledit procédé étant **caractérisé en ce que** la surface tactile est de conformation sensiblement rectangulaire , et virtuellement segmentée (P1) en quatre zones (Z1, Z2, Z3, Z4) déterminées par les diagonales du rectangle de la surface tactile, chacune des zones étant ainsi associée à un côté dudit rectangle, le procédé comprenant une détection d'un geste global et les étapes suivantes pour chacune des zones :
- filtrer (P2) des déplacements d'un doigt de l'utilisateur sur ladite zone pour identifier uniquement les déplacements du doigt selon une direction parallèle au côté du rectangle associé à ladite zone,
- détecter (P3) un sens de déplacement des déplacements filtrés dudit doigt par rapport à ladite direction,
- jouer (P4) un son par une unité sonore (308) et/ou générer une vibration par une unité vibratoire (310) en fonction dudit sens de déplacement détecté,
- émettre (P5) à destination de l'équipement distant une consigne d'augmentation ou de diminution du niveau de l'équipement distant selon le sens du déplacement détecté.

2. Procédé selon la revendication 1, pour lequel la détection d'un geste global correspondant à un déplacement d'un doigt sur un arc orienté de la surface tactile depuis une première zone vers une seconde zone génère une même consigne pour chaque sens de déplacement détecté sur la première et la seconde zone.

3. Procédé selon la revendication 1 ou 2, pour lequel la détection d'un geste global correspondant à un déplacement d'un doigt sur une boucle orientée de la surface tactile entourant l'intersection des diagonales depuis une première zone génère une même consigne pour chaque sens de déplacement détecté sur chacune des zones.

4. Procédé selon l'une quelconque des revendications précédentes, pour lequel la détection d'un geste global correspondant à un déplacement d'un doigt depuis une première zone sur une pluralité de boucles orientées de la surface tactile entourant chacune l'intersection des diagonales génère une même consigne pour chaque sens de déplacement détecté.

5. Procédé selon l'une quelconque des revendications précédentes, pour lequel l'étape de jouer un son par l'unité sonore comprend une étape de faire varier l'intensité et/ou la fréquence du son joué par l'unité sonore en fonction du sens de déplacement détecté.

6. Procédé selon l'une quelconque des revendications précédentes, pour lequel l'étape de générer une vibration par l'unité vibratoire comprend une étape de faire varier l'intensité et/ou la fréquence de la vibration générée par l'unité vibratoire en fonction du sens de déplacement détecté.

7. Procédé selon l'une quelconque des revendications précédentes, pour lequel l'étape de jouer un son par l'unité sonore comprend une étape de faire varier l'intensité et/ou la fréquence du son joué par l'unité sonore en fonction d'une consigne de niveau de l'équipement distant par rapport à des consignes basses et hautes de l'équipement distant.

8. Procédé selon l'une quelconque des revendications précédentes, pour lequel l'étape de générer une vibration par l'unité vibratoire comprend une étape de faire varier l'intensité et/ou la fréquence de la vibration générée par l'unité vibratoire en fonction de la consigne de niveau de l'équipement distant par rapport à des consignes basses et hautes de l'équipement distant.

9. Procédé selon l'une des revendications 7 ou 8, comprenant une réception de la consigne de niveau de l'équipement distant par des moyens de réception sans-fils.

10. Procédé selon l'une quelconque des revendications 7 à 9, comprenant une mémorisation de la consigne de niveau de l'équipement distant qui est déterminée à partir d'un historique d'émissions de consignes d'augmentation ou de diminution à destination de l'équipement distant.

11. Procédé selon l'une quelconque des revendications précédentes, les étapes suivantes ne sont réalisées que lorsque la condition d'une détection (P0) d'un geste global suivie d'une comparaison (C) est vérifiée.

12. Dispositif portatif de commande (300) d'une consigne de niveau d'un équipement distant (200), ledit dispositif comportant :
- une surface tactile (304) de conformation sensiblement rectangulaire ;
- une unité de traitement (306) ;
- une unité sonore (308) et/ou une unité vibratoire (310) ;
- une unité d'émission de consigne de niveau à destination de l'équipement distant ;
dispositif dans lequel l'unité de traitement est configurée et/ou programmée pour mettre en œuvre les étapes du procédé selon l'une quelconque des revendications précédentes.

13. Produit programme d'ordinateur comprenant des instructions pour réaliser les étapes du procédé de commande d'une consigne de niveau d'un équipement distant par un dispositif portatif selon l'une quelconque des revendications 1 à 11 lorsqu'il est exécuté par un appareil informatique.

14. Système (100) comprenant un équipement distant (200) et un dispositif portatif (300) de commande d'une consigne de niveau de l'équipement distant selon la revendication 12.

## Patentansprüche

1. Verfahren zum Steuern (P) eines Pegeleinstellwertes eines entfernten Geräts (200) durch eine tragbare Vorrichtung (300), das eine Tastfläche (304) aufweist, wobei das Verfahren **dadurch gekennzeichnet ist, dass** die Tastfläche (304) im Wesentlichen rechteckig ausgebildet und virtuell segmentiert (P1) ist in vier Zonen (Z1, Z2, Z3, Z4), die durch die Diagonalen des Rechtecks der Tastfläche bestimmt sind, wobei jede der Zonen einer der Seiten des Rechtecks zugeordnet ist, wobei das Verfahren eine Erfassung einer allgemeinen Geste und die folgenden Schritte für jede der Zonen aufweist:
- Filtern (P2) der Bewegungen eines Fingers des Nutzers auf der Zone, um lediglich die Bewegungen des Fingers in einer Richtung zu identifizieren, die zu der Seite des Rechtecks parallel ist, die der Zone zugeordnet ist,
- Erfassen (P3) eines Bewegungsrichtungssinns der gefilterten Bewegungen des Fingers in dieser Richtung,
- Abspielen (P4) eines Tons durch eine akustische Einheit (308) und/oder Erzeugen einer Vibration durch eine Vibrationseinheit (310) in Abhängigkeit des erfassten Bewegungsrichtungssinns,
- Senden (P5) eines Einstellwerts an das entfernte Gerät zur Erhöhung oder Absenkung des Pegels des entfernten Geräts gemäß des erfassten Bewegungsrichtungssinns.

2. Verfahren nach Anspruch 1, wobei die Erfassung einer allgemeinen Geste, die der Bewegung eines Fingers auf einem gerichteten Bogen der Tastfläche entspricht, der von einer ersten Zone ausgehend zu einer zweiten Zone orientiert ist, einen gleichen Einstellwert für jeden auf der ersten und der zweiten Zone erfassten Bewegungsrichtungssinn erzeugt.

3. Verfahren nach Anspruch 1 oder 2, wobei die Erfassung einer allgemeinen Geste, die der Bewegung des Fingers in einer gerichteten Schlaufe der Tastfläche entspricht, die von einer ersten Zone ausgehend den Schnittpunkt der Diagonalen umgibt, einen gleichen Einstellwert für jeden auf jeder der Zonen erfassten Bewegungsrichtungssinn erzeugt.

4. Verfahren nach einem der vorstehenden Ansprüche, wobei die Erfassung einer allgemeinen Geste, die der Bewegung eines Fingers ausgehend von einer ersten Zone auf einer Vielzahl von gerichteten Schlaufen der Tastfläche, die jeweils den Schnittpunkt der Diagonalen umgeben, einen gleichen Einstellwert für jeden erfassten Bewegungsrichtungssinn erzeugt.

5. Verfahren nach einem der vorstehenden Ansprüche, wobei der Schritt des Abspielens eines Tons durch die akustische Einheit einen Schritt des Variierens der Intensität und/oder der Frequenz des durch die akustische Einheit abgespielten Tons in Abhängigkeit des erfassten Bewegungsrichtungssinns aufweist.

6. Verfahren nach einem der vorstehenden Ansprüche, wobei der Schritt des Erzeugens einer Vibration durch eine Vibrationseinheit einen Schritt des Variierens der Intensität und/oder der Frequenz der durch die Vibrationseinheit erzeugten Vibration in Abhängigkeit des erfassten Bewegungsrichtungssinns aufweist.

7. Verfahren nach einem der vorstehenden Ansprüche, wobei der Schritt des Abspielens eines Tons durch die akustische Einheit einen Schritt des Variierens der Intensität und/oder der Frequenz des durch die akustische Einheit abgespielten Tons in Abhängigkeit eines Pegeleinstellwerts des entfernten Geräts in Bezug auf untere und obere Einstellwerte des entfernten Geräts aufweist.

8. Verfahren nach einem der vorstehenden Ansprüche, für das der Schritt des Erzeugens einer Vibration durch eine Vibrationseinheit einen Schritt des Variierens der Intensität und/oder der Frequenz der durch die Vibrationseinheit erzeugten Vibration in Abhängigkeit eines Pegeleinstellwerts des entfernten Geräts in Bezug auf untere und obere Einstellwerte des entfernten Geräts aufweist.

9. Verfahren nach einem der Ansprüche 7 oder 8, das einen Empfang des Pegeleinstellwerts des entfernten Geräts durch kabellose Empfangsmittel aufweist.

10. Verfahren nach einem der Ansprüche 7 bis 9, das eine Speicherung des Pegeleinstellwerts des entfernten Geräts aufweist, der auf der Grundlage einer Historie der gesendeten Einstellwerte zur Erhöhung oder Absenkung an das entfernte Gerät bestimmt wird.

11. Verfahren nach einem der vorstehenden Ansprüche, wobei die folgenden Schritte erst durchgeführt werden, wenn die Bedingung einer Detektion (P0) einer allgemeinen Geste gefolgt von einem Vergleich (C) erfüllt ist.

12. Tragbare Vorrichtung (300) zur Steuerung eines Pegeleinstellwerts eines entfernten Geräts (200), wobei die Vorrichtung:
- eine im Wesentlichen rechteckig ausgebildete Tastfläche (304);
- eine Verarbeitungseinrichtung (306);
- eine akustische Einheit (308) und/oder eine Vibrationseinheit (310);
- eine Sendeeinheit für Pegeleinstellwerte an das entfernte Gerät aufweist; wobei die Verarbeitungseinrichtung für die Durchführung der Schritte des Verfahrens nach einem der voranstehenden Ansprüche eingerichtet und/oder programmiert ist.

13. Computerprogrammprodukt, das die Anweisungen aufweist, um die Schritte des Verfahrens zum Steuern eines Pegeleinstellwertes eines entfernten Geräts durch eine tragbare Vorrichtung nach einem der vorstehenden Ansprüche 1 bis 11 durchzuführen, wenn es durch ein informatisches Gerät ausgeführt wird.

14. System (100) mit einem entfernten Gerät (200) und einer tragbaren Vorrichtung (300) zum Steuern eines Pegeleinstellwerts des entfernten Geräts nach Anspruch 12.

## Claims

1. Method for controlling (P) a level setting of a remote item of equipment (200) by means of a portable device (300) comprising a touch-sensitive surface (304), said method being **characterized in that** the touch-sensitive surface is substantially rectangular in shape and virtually segmented (P1) into four zones (Z1, Z2, Z3, Z4) determined by the diagonals of the rectangle of the touch-sensitive surface, each of the zones thus being associated with a side of said rectangle, the method comprising detecting an overall gesture and the following steps for each of the zones:
- filtering (P2) movements of a user's finger over said zone to identify only the movements of the finger in a direction parallel to the side of the rectangle associated with said zone,
- detecting (P3) a direction of movement of the filtered movements of said finger with respect to said direction,
- playing (P4) a sound by means of a sound unit (308) and/or generating a vibration by means of a vibration unit (310) as a function of said direction of movement detected,
- transmitting (P5) a level increase or decrease setting for the remote item of equipment to the remote item of equipment according to the direction of movement detected.

2. Method according to claim 1, for which the detection of an overall gesture corresponding to a movement of a finger over an oriented arc on the touch-sensitive surface from a first zone towards a second zone generates one and the same setting for each direction of movement detected over the first and the second zone.

3. Method according to claim 1 or 2, for which the detection of an overall gesture corresponding to a movement of a finger over an oriented loop on the touch-sensitive surface surrounding the intersection of the diagonals from a first zone generates one and the same setting for each direction of movement detected over each of the zones.

4. Method according to any one of the preceding claims, for which the detection of an overall gesture corresponding to a movement of a finger from a first zone over a plurality of oriented loops on the touch-sensitive surface each surrounding the intersection of the diagonals generates one and the same setting for each direction of movement detected.

5. Method according to any one of the preceding claims, for which the step of playing a sound by means of the sound unit comprises a step of varying the intensity and/or frequency of the sound played by means of the sound unit as a function of the direction of movement detected.

6. Method according to any one of the preceding claims, for which the step of generating a vibration by means of the vibration unit comprises a step of varying the intensity and/or frequency of the vibration generated by means of the vibration unit as a function of the direction of movement detected.

7. Method according to any one of the preceding claims, for which the step of playing a sound by means of the sound unit comprises a step of varying the intensity and/or frequency of the sound played by means of the sound unit as a function of a level setting of the remote item of equipment with respect to low and high settings of the remote item of equipment.

8. Method according to any one of the preceding claims, for which the step of generating a vibration by means of the vibration unit comprises a step of varying the intensity and/or frequency of the vibration generated by means of the vibration unit as a function of the level setting of the remote item of equipment with respect to low and high settings of the remote item of equipment.

9. Method according to one of claims 7 or 8, comprising receiving the level setting of the remote item of equipment by wireless reception means.

10. Method according to any one of claims 7 to 9, comprising storing the level setting of the remote item of equipment which is determined based on a history of increase or decrease setting transmissions to the remote item of equipment.

11. Method according to any one of the preceding claims; the following steps are only carried out when the condition of detection (P0) of an overall gesture followed by a comparison (C) is verified.

12. Portable device for controlling (300) a level setting of a remote item of equipment (200), said device comprising:
- a touch-sensitive surface (304) substantially rectangular in shape;
- a processing unit (306);
- a sound unit (308) and/or a vibration unit (310);
- a unit for transmitting a level setting to the remote item of equipment;
device in which the processing unit is configured and/or programmed to implement the steps of the method according to any one of the preceding claims.

13. Computer program product comprising instructions for carrying out the steps of the method for controlling a level setting of a remote item of equipment by means of a portable device according to any one of claims 1 to 11, when it is executed by a computing device.

14. System (100) comprising a remote item of equipment (200) and a portable device (300) for controlling a level setting of the remote item of equipment according to claim 12.
